# EUROPÄISCHE PATENTANMELDUNG

(11) **EP 0 558 809 A1**
(43) Veröffentlichungstag der Anmeldung: **08.09.1993**
(21) Anmeldenummer: 92120596.9
(22) Anmeldetag: 03.12.1992
(51) Int. Cl.: B01D 53/34

(54) **Verfahren zur Reduktion von Stickoxiden in Abgasen**

(30) Priorität: 27.02.1992 DE 4206024
(71) Anmelder: ASEA BROWN BOVERI AG, CH-5401 Baden (CH)
(72) Erfinder: Bittner, Jürgen Dr., CH-5242 Birr (CH); Käfer, Gisbert, Dr., CH-5413 Birmenstorf (CH); Oldani, Markus, CH-5430 Wettingen (CH); Schade, Ekkehard, Dr., CH-5405 Baden-Dättwil (CH)
(74) Vertreter: Hetzer, Hans Jürgen

(57) **Zusammenfassung**

Bei dem Verfahren zur Reduktion von Stickoxiden in Abgasen wird das Abgas mit NCO-Radikalen, welche durch thermische Dissoziation von Isocyansäure (HNCO) entstehen, in Kontakt gebracht. Dabei wird eine unterhalb etwa 100 °C im schmelzflüssigen Zustand vorliegende Ausgangssubstanz, vorzugsweise ein Carbamat, verwendet. Diese ist gegenüber den bisher eingesetzten festen Ausgangssubstanzen besser hanzuhaben und verursacht auch keine Ablagerungen im Abgaskanal (1).

## Beschreibung

### TECHNISCHES GEBIET

Die Erfindung bezieht sich auf ein Verfahren zur Reduktion von Stickoxiden in Abgasen, bei welchem das Abgas mit NCO-Radikalen, welche durch thermische Dissoziation von Isocyansäure (HNCO) entstehen, in Kontakt gebracht wird.

### TECHNOLOGISCHER HINTERGRUND UND STAND DER TECHNIK

Neben vielen anderen Verfahren hat der sogenannte RAPRENOX-Prozess eine gewisse Bedeutung bei der Entstickung von Abgasen erlangt. Bei diesem Prozess - er wurde erstmals in der U.S. Patentschrift 4,731,231 beschrieben - wird das NCO-Radikal zur NOₓ-Reduktion eingesetzt. Die Radikale werden aus Isocyansäure HNCO durch Abspaltung des H-Atoms gewonnen. HNCO wiederum wird bei diesem Verfahren durch thermische Zersetzung von Cyanursäure (cyanuric acid) oder Oligomeren von HNCO erhalten. Aus Cyanursäure im festen Zustand bildet sich bei Temperaturen von 300 bis 400 °C und höher durch Sublimation ein gas-/dampfförmiges Zwischenprodukt, welches dann bei Temperaturen über 500 °C im Abgas zu Isocynasäure (HNCO) umgesetzt wird. Andere bekannte Verfahren verwenden Harnstoff (H₂NCONH₂) als Ausgangssubstanz. Gemeinsames Merkmal der bekannten Verfahren ist die Verwendung einer festen Ausgangssubstanz, die durch Sublimation in die Gasphase überführt wird.

Abgesehen davon, dass die Gewinnung von HNCO auf diese Weise apparativ aufwendig ist, benötigen die bekannten Verfahren relativ hohe Temperaturen und weisen den Nachteil auf, dass schwer handhabbare Nebenprodukte entstehen, die sich an kalten Stellen in der Verdampfereinrichtung ablagern.

### KURZE DARSTELLUNG DER ERFINDUNG

Der Erfindung liegt die Aufgabe zugrunde, ein Verfahren zur Reduktion von Stickoxiden anzugeben, das ebenfalls mit dem Radikal NCO arbeitet, bei dem aber die Isocyansäure bei relativ niedriger Temperatur hergestellt werden kann und damit auch wesentlich einfacher durchzuführen ist.

Diese Aufgabe wird erfindungsgemäss dadurch gelöst, dass als Ausgangssubstanz eine unterhalb von 100 °C im schmelzflüssigen Zustand vorliegende und aus der flüssigen Phase stark verdampfende Substanz verwendet wird, die unmittelbar oder nach Vorbehandlung auf das Abgas einwirkt.

Der Vorteil der Erfindung ist insbesondere darin zu sehen, dass bereits bei Temperaturen oberhalb etwa 200 °C der thermische Zerfall der Ausgangssubstanz und damit HNCO schon bei wesentlich niedriger Temperatur und einfacher als beim bekannten RAPRENOX-Verfahren erzeugt wird. Die Ausgangssubstanz ist sehr einfach handzuhaben. Es entstehen keine Ablagerungen im Abgaskanal.

Ausführungsbeispiele der Erfindung sowie die damit erzielbaren Vorteile werden nachfolgend anhand der Zeichnung näher erläutert.

### KURZE BESCHREIBUNG DER ZEICHNUNG

In der Zeichnung ist ein Ausführungsbeispiel der Erfindung schematisch dargestellt, und zwar zeigt:
- Fig.1: eine schematische Darstellung des Abgaskanals einer thermischen Kraftanlage;
- Fig.2: ein Diagramm, das den Zerfall von Methylcarbamat in Abhängigkeit von der Temperatur veranschaulicht.

### WEGE ZUR AUSFÜHRUNG DER ERFINDUNG

In die Abgasleitung 1 einer thermischen Kraftanlage, z.B. einer Gasturbine, mündet eine erste Leitung 2, die in eine erste Behandlungskammer 3 führt. Diese wiederum ist über eine zweite Leitung 4 mit einer zweiten Behandlungskammer 5 verbunden. Die zweite Behandlungskammer 5 ist teilweise mit der Ausgangssubstanz 6, in diesem Falle Methylcarbamat, gefüllt. Sie ist auf eine Temperatur von etwa 80 °C aufgeheizt und liegt deshalb zum Teil im flüssigen Zustand, zum Teil schon in Dampfform vor.

Der erzeugte Dampf tritt über die Leitung 4 in die (optionale) erste Behandlungskammer 3 ein. Gleichzeitig kann über eine dritte Leitung 7 ein Gasstrom, beispielsweise von Luft oder Stickstoff, in die zweite Behandlungskammer 5 eingeführt werden. Der zusätzliche Gasstrom verdünnt den Dampf und beschleunigt sein Ausströmen aus der zweiten Behandlungskammer 5.

Das weitere Geschehen hängt davon ab, ob die (optionale) Behandlungskammer vorhanden ist, und welche Bedingungen dort herrschen, oder ob das dampfförmige Methylcarbamat direkt dem Abgas zugeführt bzw. eingemischt wird.

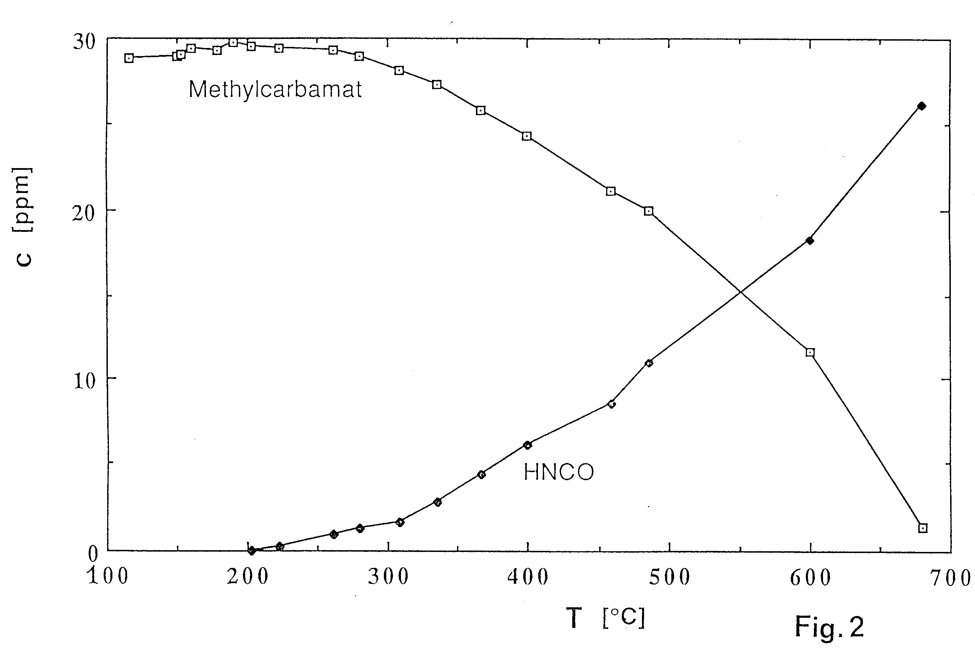

Im letztgenannten Fall erfolgt die thermische Zersetzung des dampfförmigen Methylcarbamats unter Bildung von HNCO und die Zersetzung des HNCO unter Bildung von NCO-Radikalen, welche letztendlich die Reduktion der Stickoxyd bewirken, im Abgas. Der Zerfall von dampfförmigem Methylcarbamat und die Bildung von HNCO in Abhängigkeit von der Temperatur wird durch das in Fig.2 dargestellte Diagramm veranschaulicht. Die Verweilzeit des dampfförmigen Methylcarbamats bei der auf der Abszissenachse aufgetragenen Temperatur war jeweils in der Grössenordnung von wenigen Zehntelsekunden. Es ist deutlich zu erkennen, dass bereits bei relativ niedrigen Temperaturen die Bildung von HNCO einsetzt. Diese Temperaturen liegen erheblich unter denjenigen Temperaturen, die für die Bildung von HNCO aus Cyanursäure (über 500 °C) oder aus Harnstoff notwendig sind.

Ist die optionale Behandlungskammer 3 vorhanden, und herrscht dort eine entsprechend dem Diagramm der Fig.2 eine genügend hohe Temperatur, so wird das dampfförmige Methylcarbamat in der ersten Behandlungskammer 3 in HNCO und andere Zerfallsprodukte zerlegt. Das HNCO gelangt dann mit den anderen Zerfallsprodukten des Methylcarbamats und gegebenenfalls mit dem zusätzlich über die Leitung 7 beigefügten Gasstrom durch die Leitung 2 in die Abgasleitung 1, wo es mit dem Abgas vermischt wird und dann, wenn die Abgastemperatur genügend hoch ist, NCO-Radikale entstehen, die in bekannter Weise mit den Stickoxiden reagieren.

Das Aufheizen der ersten Behandlungskammer 3 bzw. die Wärmezufuhr zu dieser kann durch eine separate Wärmequelle, gegebenenfalls unter Ausnutzung der (Abgas-)Wärme der Kraftanlage, erfolgen.

Es ist aber auch möglich, in der ersten Behandlungskammer 3 die Temperatur so hoch einzustellen, dass schon in dieser das HNCO zumindest teilweise in atomaren Wasserstoff und NCO-Radikale zersetzt wird. Hierfür sind Temperaturen von grösser 600 °C notwendig. Die dann unmittelbare Einfügung von NCO-Radikalen erlaubt die Reduktion der Stickoxyd bei niedrigeren Abgastemperaturen als bisher, da diese Radikale nicht erst im Abgas gebildet werden müssen, was einmal eine genügend hohe Temperatur im Abgas sowie auch eine gewisse Zeitdauer für die Radikalbildung erfordern würde.

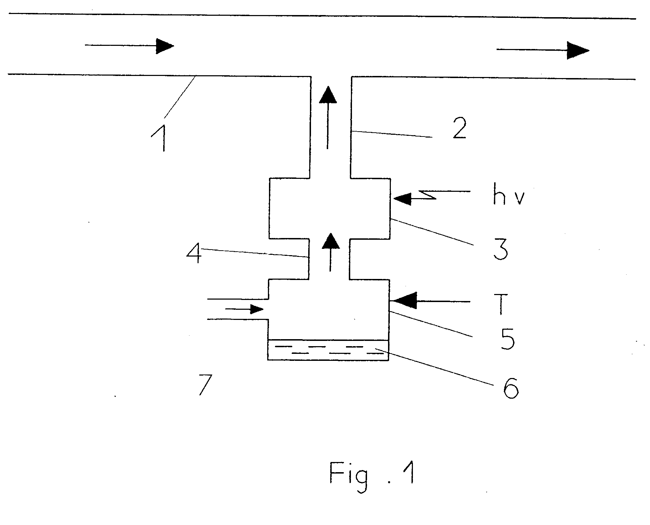

Die Erzeugung von NCO-Radikalen aus dem HNCO vor dem Eintritt in das Abgas kann auch durch andere physikalischen und/oder chemische Vorbehandlung erfolgen, wie z.B. photolytische und/oder katalytische Vorbehandlung und/oder durch Bestrahlung mit Infrarot-Licht, Elektronenstrahlen, Radiowellen etc.. In Fig.1 ist beispielsweise die Vorbehandlung mit UV-Licht dargestellt, bei welcher die Absorption von UV-Lichtquanten die Abspaltung eines H-Atomes von vom HNCO bewirken.

Aufgrund der kurzen Lebensdauer der NCO-Radikale darf die Leitung 2 zwischen dem Abgaskanal 1 und der Vorbehandlungskammer nicht sehr lang sein.

Neben dem im Ausführungsbeispiel genannten Methylcarbamat kommen eine Reihe von anderen Ausgangssubstanzen in Frage, nämlich generell sauerstoffhaltige Kohlenwasserstoffe mit zumindest einer Stickstoff-Funktion, aliphatisch substituierte Carbamate, neben dem erwähnten Methylcarbamat Aethylcarbamat, tertiäres Butylcarbamat. Ferner finden als Ausgangssubstanz Oxyharnstoff oder Hydroxyharnstoff Hydrazinate oder ihre Ester, vorzugsweise Hydrazincarbonsäure oder Hydrazincarbonsäureester, Oxalsäureamid oder Oxalsäurediamid und Semicarbazone Verwendung.

### BEZEICHNUNGSLISTE

- 1: Abgasleitung
- 2: erste Leitung
- 3: erste Behandlungskammer
- 4: zweite Leitung
- 5: zweite Behandlungskammer
- 6: Ausgangssubstanz
- 7: dritte Leitung

## Patentansprüche

1. Verfahren zur Reduktion von Stickoxiden in Abgasen, bei welchem das Abgas mit NCO-Radikalen, welche durch thermische Dissoziation von Isocyansäure (HNCO) entstehen, in Kontakt gebracht wird, dadurch gekennzeichnet, dass als Ausgangssubstanz eine unterhalb von 100 °C im schmelzflüssigen Zustand vorliegende und aus der flüssigen Phase stark verdampfende Substanz verwendet wird, die unmittelbar oder nach Vorbehandlung auf das Abgas einwirkt.

2. Verfahren nach Patentspruch 1, dadurch gekennzeichnet, dass als Ausgangssubstanz sauerstoffhaltige Kohlenwasserstoffe mit zumindest einer Stickstoff-Funktion verwendet wird.

3. Verfahren nach Patentspruch 2, dadurch gekennzeichnet, dass als Ausgangssubstanz ein aliphatisch substituiertes Carbamat, insbesondere Methylcarbamat, Aethylcarbamat, tertiäres Butylcarbamat, verwendet wird.

4. Verfahren nach Patentspruch 1, dadurch gekennzeichnet, dass als Ausgangssubstanz Oxy - Harnstoff oder Hydroxy-Harnstoff verwendet wird.

5. Verfahren nach Patentspruch 1, dadurch gekennzeichnet, dass als Ausgangssubstanz Hydrazinate oder ihre Ester, vorzugsweise Hydrazincarbonsäure oder Hydrazincarbonsäureester, verwendet werden.

6. Verfahren nach Patentspruch 1, dadurch gekennzeichnet, dass als Ausgangssubstanz Oxalsäureamid oder Oxalsäurediamid verwendet wird.

7. Verfahren nach Patentspruch 1, dadurch gekennzeichnet, dass als Ausgangssubstanz Semicarbazone, verwendet werden.

8. Verfahren nach einem der Ansprüche 1 bis 7, dass zur Abspaltung des H-Atoms aus dem HNCO-Molekül die Ausgangssubstanz chemisch und/oder physikalisch vorbehandelt wird.

9. Verfahren nach Anspruch 8, dadurch gekennzeichnet, dass die Vorbehandlung auf thermischem, katalytischem und/oder photolytischem Wege erfolgt.
